# EUROPÄISCHE PATENTSCHRIFT

(11) **EP 2 107 958 B1**
(45) Veröffentlichungstag und Bekanntmachung des Hinweises auf die Patenterteilung: **17.07.2013**
(21) Anmeldenummer: 07856036.4
(22) Anmeldetag: 28.11.2007
(51) Int. Cl.: B23B 27/16, B23C 5/24

(54) **SPANABHEBENDES WERKZEUG**
MACHINING TOOL
OUTIL D'USINAGE À ENLÈVEMENT DE COPEAUX

(30) Priorität: 30.11.2006 DE 102006057052
(43) Veröffentlichungstag der Anmeldung: 14.10.2009
(73) Patentinhaber: Gühring OHG, 72458 Albstadt (DE)
(72) Erfinder: MATHEIS, Klaus, 88605 Sauldorf-Rast (DE)
(74) Vertreter: Meitinger, Thomas Heinz
(86) Internationale Anmeldenummer: PCT/DE2007/002143
(87) Internationale Veröffentlichungsnummer: WO 2008/064657

(56) Entgegenhaltungen:
- DE-A1- 10 350 851
- DE-A1-102004 017 714
- GB-A- 1 211 291

## Beschreibung

Die Erfindung betrifft ein spanabhebendes Werkzeug nach dem Oberbegriff des Anspruchs 1.

### Stand der Technik:

Bei einer bekannten Ausführungsform eines spanabhebenden Werkzeugs ist an einem Werkzeug-Grundkörper ein Tragorgan mit einer Schneidplatte elastisch angeordnet. Zur insbesondere radialen Positionierung des Tragorgans mit Schneidplatte sind Justiermittel vorgesehen.

Mit den Justiermitteln wird der Abstand eines Teils des Tragorgans zum Grundkörper des Werkzeugs verändert.

DE 10 2004 017 714 offenbart ein Einstell- und Verstellsystem für leistenförmige Schneidenträger an spanend arbeitenden Werkzeugen, wie Walzenfräsern, mit einem mehrere längsseitig schräg zur Längsmittenachse geneigt eingearbeitete Nuten aufweisenden Grundkörper, mehreren in einer jeweilige Nut aufgenommenen Schneidenträgern, einem den Grundkörper axial durchgreifenden, an den beiden Enden durch jeweils einen Verschlussbolzen verschlossenen Kanal, einem längsmittig in dem Kanal angeordnetes Trennstück, das den Kanal in ein vorderes Kanalstück und ein hinteres Kanalstück trennt, sowie mehreren, einem jeweiligen Schneidenträger zugeordneten, vorderen und hinteren hydraulisch verschiebbaren Stellgliedern zum Einstellen des Schneidenträgers. Jedes Stellglied mündet an einem radial äußeren Ende in eine jeweilige Nut. Ein jeweiliges vorderes Stellglied mündet in das vordere Kanalstück und ein jeweiliges hinteres Stellglied mündet in das hintere Kanalstück.

DE 103 50 851, die dem Oberbegriff von Anspruch 1 zugrundeliegt, offenbart ein Fräswerkzeug mit einem mehrere axial oder radial außen offene Aufnahmen aufweisenden Tragkörper, mindestens eine in einen Grund der Aufnahme mündende Bohrung, in der ein mittels eines Hydraulikmediums verschiebbarer Kolben angeordnet ist, mehreren in den Aufnahmen festspannbar aufgenommenen und mit ihren Schneiden radial über den Tragkörper hervorstehenden und jeweils an einem Messerträger befestigten Messern und mindestens einer einem jeweiligen Messer zugeordneten Schraube in einer die Schraube aufnehmenden Bohrung. Jede Aufnahme weist axial in entgegengesetzte Richtungen weisende Axialnuten auf, und jeder Messerträger weist einen im Querschnitt T-fömigen Fuß mit zwei Armen auf, wobei ein jeweiliger Arm in eine der axial gegenüberliegenden Axialnuten eingreift. Mindestens eine Axialnut ist in Fluidkommunikation mit der Bohrung der Schraube. Die axiale oder radiale Position der Schneide eines jeden festgespannten Messers durch Betätigen der mindestens einen Schraube hydraulisch betätigt fein einstellbar.

### Aufgabe und Vorteile der Erfindung:

Der Erfindung liegt die Aufgabe zugrunde, ein spanabhebendes Werkzeug der einleitend bezeichneten Art bereit zu stellen, dass einen vorteilhaften Einstellmechanismus für die Ausrichtung des Tragorgans am Grundkörper umfasst.

Diese Aufgabe wird durch die Merkmale des Anspruchs 1 gelöst. In den abhängigen Ansprüchen sind vorteilhafte und zweckmäßige Weiterbildungen der Erfindungen angegeben.

Die Erfindung geht von einem spanabhebenden Werkzeug mit einem Werkzeugträger aus, der ein Tragorgan mit einer Schneidplatte und einen Grundkörper umfasst. Das Tragorgan ist elastisch mit dem Grundkörper verbunden. Außerdem sind Justiermittel vorgesehen, um das Tragorgan mit Schneidplatte am Grundkörper positionieren zu können. Die Justiermittel weisen ein hydraulisch und/oder pneumatisch betätigbares Einstellelement auf.

Erfindungsgemäß ist der Werkzeugträger mit Tragorgan und Grundkörper einstückig ausgebildet. Dadurch können in vergleichsweise einfacher Weise definierte elastische Eigenschaften zwischen Grundkörper und Tragorgan erreicht werden. einem Werkzeugträger aus, der ein Tragorgan mit einer Schneidplatte und einen Grundkörper umfasst. Das Tragorgan ist elastisch mit dem Grundkörper verbunden. Außerdem sind Justiermittel vorgesehen, um das Tragorgan mit Schneidplatte am Grundkörper positionieren zu können. Der wesentliche Aspekt der Erfindung liegt darin, dass die Justiermittel ein hydraulisch und/oder pneumatisch betätigbares Einstellelement aufweisen.

Damit lässt sich zunächst eine vergleichsweise feinfühlige Einstell- bzw. Ausrichtungsmöglichkeit für das Tragorgan und der darauf sitzenden Schneidplatte realisieren. Bei der Feinbearbeitung von Werkstücken kann hierdurch z.B. ein Verschleißausgleich der Schneidplatte vorgenommen. Das betätigbare Einstellelement kann außerdem an einer gewünschten Position untergebracht werden, wobei sich aufgrund der hydraulischen und/oder pneumatischen Betätigung ein entsprechendes Justierorgan im Wesentlichen unabhängig von der Positionierung des Einstellelements an einer anderen bevorzugten Stelle anordnen lässt.

In einer besonders bevorzugten Ausgestaltung der Erfindung umfassen die Justiermittel einen hydraulisch bewegbaren Kolben. Der Kolben drückt vorzugsweise auf das Tragorgan, im elastischen Bereich dessen Position bzw. Ausrichtung in Bezug auf den Grundkörper vorzugeben. Ein Kolben lässt sich in einer passenden Bohrung leicht führen und mit entsprechenden Dichtmitteln mit vergleichsweise wenig Aufwand nach außen zuverlässig abdichten.

Vorteilhafterweise weisen die Justiermittel eine mit Fluid gefüllte Fluidkammer auf. In diesem Zusammenhang ist es überdies bevorzugt, wenn eine erste Öffnung der Fluidkammer von einer Justierschraube mit Dichtmittel verschlossen ist. Durch die Justierschraube lässt sich das Volumen der Fluidkammer verändern. Bei einem inkompressiblen Fluid hat das zur Folge, dass ein Einstellelement, z.B. ein Kolben, der eine zweite Öffnung der Fluidkammer verschließt, entsprechend der Volumenänderung beim Einschrauben der Justierschraube aus dieser Öffnung herausgeschoben wird, um dabei auf das Tragorgan einzuwirken.

In einer besonders bevorzugten Ausgestaltung der Erfindung wirkt das Einstellelement unmittelbar auf das Tragorgan. Denkbar ist jedoch auch eine dazwischen geschaltete Mechanik, um beispielsweise über Hebel oder ein Getriebe gewünschte Übersetzungsverhältnisse realisieren zu können.

Im weiteren ist es besonders bevorzugt, wenn die Fluidkammer im Grundkörper ausgebildet ist. Der Grundkörper besitzt regelmäßig ausreichend Volumen und Positionsmöglichkeiten, die Fluidkammer und Öffnungen für eine Einstellschraube bzw. ein Einstellelement geeignet unterbringen zu können.

Um ein Hydrauliksystem mit hydraulischen betätigbaren Einstellelement vergleichsweise einfach auf eine Position des Tragorgans anpassen zu können, wird im Weiteren vorgeschlagen, dass am Tragorgan, z.B. für das Einstellelement, ein verstellbares Wiederlager vorgesehen ist. Mit einem derartigen Wiederlager kann beispielsweise eine Grobeinstellung vorgenommen werden, so dass mit dem Hydrauliksystem lediglich eine Feinabstimmung erfolgen muss. Entsprechend kann das Hydrauliksystem nur auf eine Feinabstimmung, z.B. im Zehntelbereich ausgelegt sein.

In einer überdies bevorzugten Ausgestaltung der Erfindung ist die Fluidkammer derart ausgebildet, dass das Einstellelement und die Justierschraube im Winkel zueinander stehen, vorzugsweise in einem Winkel von ungefähr bzw. exakt 90°. Durch eine solche geometrische Anordnung lässt sich nicht nur vergleichsweise einfach eine Fluidkammer durch zwei aufeinander treffende Bohrungen ausbilden, sondern eine günstige Positionierung der Hydraulikteile erzielen. Es ist jedoch auch denkbar, dass ein Einstellelement und eine Justierschraube axial fluchtend im Werkzeug untergebracht sind.

Ebenso möglich ist die Unterbringung eines Hydrauliksystems im Tragorgan. Auch eine Unterbringung des Hydrauliksystems teilweise im Tragorgan und teilweise im Grundkörper ist nicht ausgeschlossen.

Zur Einstellung des Hydrauliksystems wird im Weiteren vorgeschlagen, dass einer Justierschraube ein Verschiebeelement z.B. ein Kolbenelement nachgeordnet ist, das Dichtmittel zu einer Flüidkammer aufweist. Durch diese Maßnahme kann eine einfache Schraube, z.B. eine Madenschraube für die Justierung des Hydrauliksystems zur Anwendung kommen. Im Weiteren ist es bevorzugt, wenn die Querschnittsfläche eines Einstellelements und einer Justierschraube bzw. eines nachgeordneten gedichteten Verschiebeelements so aufeinander abgestimmt sind, dass eine gewünschte feinfühlige Verstellung des Einstellelements über die Justierschraube möglich ist, in dem ein Verschiebeweg eines Verschiebeelements durch die entsprechenden Querschnittsunterschiede insbesondere "untersetzt" wird.

### Zeichnungen:

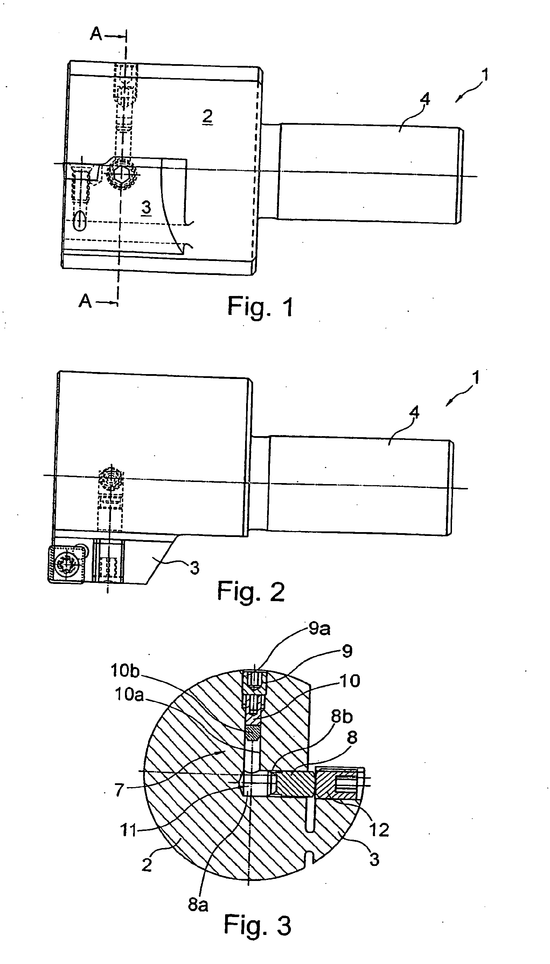

Ein Ausführungsbeispiel der Erfindung ist in den Zeichnungen dargestellt und unter Angabe weiterer Vorteile und Einzelheiten nachstehend näher erläutert. Es zeigen
- Figur 1: eine Seitenansicht eines Werkzeugs mit hydraulischer Schneidplatteneinstellung,
- Figur 2: eine in Bezug auf Figur 1 um 90° gedrehte Seitenansicht des Werkzeugs und
- Figur 3: eine Schnittansicht des Werkzeugs nach Figur 1 bei einem Schnitt entlang der Schnittlinie A-A in Figur 1.

### Beschreibung des Ausführungsbeispiels:

In den Figuren ist ein Feinbearbeitungswerkzeug 1 abgebildet. Das Feinbearbeitungswerkzeug 1 umfasst einen Grundkörper 2 und einen daran einstückig angeordneten Tragarm 3. Zur Aufnahme des Werkzeugs in z.B. eine Spindel einer Werkzeugmaschine ist ein Schaft 4 vorgesehen.

Am Tragarm 3 ist eine Schneidplatte 5 beispielhaft über eine Befestigungsschraube 6 angeordnet.

Die Position des Tragarms 3 wird über ein Hydrauliksystems 7 vorgegeben, dass im Grundkörper 2 ausgebildet ist. Das Hydrauliksystem 7 umfasst einen Einstellkolben 8 der in einer Bohrung 8a verschiebbar geführt ist. An der zum Tragarm abgewandten Seite ist eine Dichtung 8b vorgesehen, um den Kolben 8 gegen die Wandung der Bohrung 8a zuverlässig abzudichten.

Im Weiteren umfasst das Hydrauliksystem eine Justierschraube 9 in einer Gewindebohrung 9a im Grundkörper 2.

Die Justierschraube 9 drückt auf ein Kolbenelement 10, das in einer der Gewindebohrung 9a nachgeordneten Bohrung 10a verschiebbar angeordnet ist.

Auf der zur Justierschraube 9 entgegengesetzten Seite des Kolbenelements 10 ist eine Dichtung 10b vorgesehen, um das Kolbenelement 10 nach außen hin zur Justierschraube 9 zuverlässig abzudichten. Die Bohrung 8a und die Bohrung 10a schneiden sich und bilden mit den um den vom Einstellkolben 8 bzw. dessen Dichtung 8b und vom Kolben 10 bzw. dessen Dichtung 10b nicht eingenommenen Volumina der jeweiligen Bohrungen 8a bzw. 10a eine Fluidkammer 11 aus. Die Fluidkammer 11 ist vorzugsweise mit einem Hydrauliköl befüllt.

Durch Verstellen der Justierschraube 9, insbesondere Eindrehen, wird das Kolbenelement 10 mitverschoben. Zum Volumenausgleich des dadurch verdrängten Hydraulikfluids wird der Einstellkolben 8 aus der Bohrung 8a hinausgeschoben und drückt auf den Tragarm 3.

Ein Wiederlager am Tragarm 3 ist als die Schraube 12 ausgebildet. Die Schraube 12 weist beispielsweise einen Innensechskant auf, um eine Verstellung am Tragarm 3 vornehmen zu können. Damit kann z.B. eine Grobjustierung in Bezug auf die Einstellung des Hydrauliksystems 7 erfolgen.

Die Justierschraube 9 kann vorteilhafterweise ebenfalls über einen Innensechskant betätig werden.

In einer außerdem bevorzugten Ausgestaltung der Erfindung besitzt das Hydrauliksystem 7 eine fernbetätigte Bedienung.

Z.B. ist das Hydrauliksystem 7 über eine Hydraulikleitung mit einem vom Werkzeug 1 separaten Steuersystem verbunden. Dies kann über eine separate Hydraulikleitung erfolgen.

Die Hydraulikleitung ist beispielweise als zentraler Kanal im Feinbearbeitungswerkzeug 1 ausgebildet.

Auf diese Weise kann die Versorgung des zentralen Kanals (nicht dargestellt) über eine Maschinespindel einer Werkzeugmaschine erfolgen. Dies ist insbesondere dann von Vorteil, wenn das Werkzeug 1 rotierend eingesetzt wird. Bei einer nicht rotierenden Anwendung ist es allerdings auch denkbar, eine Hydraulikleitung außerhalb der Werkzeugachse zuzuführen, gegebenenfalls auch auf der Außenseite des Werkzeugs.

### Bezugszeichenliste:

- 1: Feinbearbeitungswerkzeug
- 2: Grundkörper
- 3: Tragarm
- 4: Schaft
- 5: Schneidplatte
- 6: Befestigungsschraube
- 7: Hydrauliksystem
- 8: Einstellkolben
- 8a: Bohrung
- 8b: Dichtung
- 9: Justierschraube
- 9a: Gewindebohrung
- 10: Kolbenelement
- 10a: Bohrung
- 10b: Dichtung
- 11: Fluidkammer
- 12: Schraube

## Patentansprüche

1. Spanabhebendes Werkzeug (1) mit einem Werkzeugträger, der ein Tragorgan (3) mit einer Schneidplatte (5) und einen Grundkörper (2) umfasst, wobei das Tragorgan (3) elastisch mit den Grundkörper (2) verbunden ist, sowie Justiermittel zur Positionierung des Tragorgans (3) mit Schneidplatte (5) am Grundkörper, wobei die Justiermittel ein hydraulisch und/oder pneumatisch betätigbares Einstellelement (8) aufweisen, **dadurch gekennzeichnet, dass** der Werkzeugträger mit Tragorgan (3) und Grundkörper (2) einstückig ausgebildet ist.

2. Werkzeug nach Anspruch 1, **dadurch gekennzeichnet, dass** die Justiermittel eine mit Fluid gefüllte Fluidkammer (11) aufweisen.

3. Werkzeug nach einem der vorhergehenden Ansprüche, **dadurch gekennzeichnet, dass** eine erste Öffnung der Fluidkammer (11) von einer Justierschraube (9) mit Dichtmittel (0b) verschlossen ist.

4. Werkzeug nach einem der vorhergehenden Ansprüche, **dadurch gekennzeichnet, dass** eine zweite Öffnung der Fluidkammer (11) mit dem Einstellelement (8) verschlossen ist.

5. Werkzeug nach einem der vorhergehenden Ansprüche, **dadurch gekennzeichnet, dass** das Einstellelement (8) unmittelbar auf das Tragorgan (3) wirkt.

6. Werkzeug nach einem der vorhergehenden Ansprüche, **dadurch gekennzeichnet, dass** die Fluidkammer (11) im Grundkörper (2) ausgebildet ist.

7. Werkzeug nach einem der vorhergehenden Ansprüche, **dadurch gekennzeichnet, dass** am Tragorgan (3) ein verstellbares Wiederlager (12) vorgesehen ist.

8. Werkzeug nach einem der vorhergehenden Ansprüche, **dadurch gekennzeichnet, dass** die Fluidkammer (11) derart ausgebildet ist, dass das Einstellelement (8) und die Justierschraube (9) im Winkel zueinander stehen.

9. Werkzeug nach einem der vorhergehenden Ansprüche, **dadurch gekennzeichnet, dass** das Einstellelement einen hydraulisch bewegbaren Kolben (8) umfasst.

10. Werkzeug nach Anspruch 9, **dadurch gekennzeichnet, dass** der Kolben (8) mit Dichtmitteln (8b) versehen ist.

## Claims

1. A cutting tool (1) with a tool holder comprising a holding member (3) with a cutting insert (5) and a base body (2), wherein the holding member (3) is elastically connected to the base body (2), as well as adjusting means for positioning the holding member (3) with cutting insert on the base body, wherein the adjusting means have a hydraulically and/or pneumatically actuatable adjusting member (8), **characterized in that** the tool holder with holding member (3) and base body (2) is formed as one piece.

2. The cutting tool according to claim 1, **characterized in that** the adjusting means have a fluid-filled fluid chamber (11).

3. The tool according to any one of the preceding claims, **characterized in that** a first opening of the fluid chamber (11) is sealed by an adjusting screw (9) having sealing means (10b).

4. The tool according to any one of the preceding claims, **characterized in that** a second opening of the fluid chamber (11) is sealed by the adjusting member (8).

5. The tool according to any one of the preceding claims, **characterized in that** the adjusting member (8) acts directly on the holding member (3).

6. The tool according to any one of the preceding claims, **characterized in that** the fluid chamber (11) is formed in the base body (2).

7. The tool according to any one of the preceding claims, **characterized in that** in the holding member (3) an adjustable abutment (12) is provided.

8. The tool according to any one of the preceding claims, **characterized in that** the fluid chamber (11) is formed such that the adjusting member (8) and the adjusting screw (9) are at an angle to each other.

9. The tool according to any one of the preceding claims, **characterized in that** the adjusting member comprises hydraulically movable piston (8).

10. The tool according to claim 9, **characterized in that** the piston (8) has sealing means (8b).

## Revendications

1. Outil (1) pour usinage par enlèvement de copeaux, comportant un porte-outil qui comprend un organe de support (3) muni d'une plaque de coupe (5) et un corps de base (2), ledit organe de support (3) étant assemblé de manière élastique au corps de base (2), ainsi que des moyens d'ajustement pour le positionnement de l'organe de support (3) avec la plaque de coupe (5) sur le corps de base (2), lesdits moyens d'ajustement comportant un élément de réglage (8) pouvant être actionné par voie hydraulique et/ou pneumatique, **caractérisé en ce que** le porte-outil est réalisé d'un seul tenant avec l'organe de support (3) et le corps de base (2).

2. Outil selon la revendication 1, **caractérisé en ce que** les moyens d'ajustement comportent une chambre de fluide (11) contenant un fluide.

3. Outil selon l'une quelconque des revendications précédentes, **caractérisé en ce qu'**une première ouverture de la chambre de fluide (11) est fermée par une vis d'ajustement (9) munie de moyens d'étanchéité (10b).

4. Outil selon l'une quelconque des revendications précédentes, **caractérisé en ce qu'**une deuxième ouverture de la chambre de fluide (11) est fermée par l'élément de réglage (8).

5. Outil selon l'une quelconque des revendications précédentes, **caractérisé en ce que** l'élément de réglage (8) agit directement sur l'organe de support (3).

6. Outil selon l'une quelconque des revendications précédentes, **caractérisé en ce que** la chambre de fluide (11) est réalisée dans le corps de base (2).

7. Outil selon l'une quelconque des revendications précédentes, **caractérisé en ce qu'**une butée (12) réglable est prévue sur l'organe de support (3).

8. Outil selon l'une quelconque des revendications précédentes, **caractérisé en ce que** la chambre de fluide (11) est configurée de telle sorte que l'élément de réglage (8) et la vis d'ajustement (9) sont disposés de manière à former un angle l'un avec l'autre.

9. Outil selon l'une quelconque des revendications précédentes, **caractérisé en ce que** l'élément de réglage comporte un piston (8) mobile par voie hydraulique.

10. Outil selon la revendication 9, **caractérisé en ce que** ledit piston (8) est muni de moyens d'étanchéité (8b).
